# EUROPEAN PATENT SPECIFICATION

(11) **EP 3 929 517 B1**
(45) Date of publication and mention of the grant of the patent: **06.03.2024**
(21) Application number: 21178658.7
(22) Date of filing: 10.06.2021
(51) Int. Cl.: F27D 19/00, F27D 21/00

(54) **MEASURING SYSTEM FOR FOUNDRY FURNACES, CONTAINERS, SILOS AND CORRESPONDING DRUM-LIKE OBJECTS**
MESSSYSTEM FÜR GIESSEREIÖFEN, BEHÄLTER, SILOS UND ENTSPRECHENDE TROMMELARTIGE OBJEKTE
SYSTÈME DE MESURE POUR FOURS DE FONDERIE, CONTENEURS, SILOS ET OBJETS CORRESPONDANTS EN FORME DE TAMBOUR

(30) Priority: 22.06.2020 FI 20205652
(43) Date of publication of application: 29.12.2021
(73) Proprietor: TMK Teollisuuden Mittaus- ja Kalibrointipalvelu Oy, 32920 Kauvatsa (FI)
(72) Inventor: TUURALA, Lasse, 21200 Raisio (FI); RITAMÄKI, Pekka, 33820 Tampere (FI); KARILAINEN, Pekka, 33720 Tampere (FI)
(74) Representative: Berggren Oy

(56) References cited:
- WO-A1-2017/207817
- CN-A- 1 651 857
- CN-A- 103 900 374
- CN-A- 111 272 480
- CN-U- 211 012 522

## Description

### Technical field

The invention relates to a measuring system for foundry furnaces, containers, silos and corresponding drum-like objects for challenging conditions. In particular the invention relates to a measuring system according to the preamble part of the independent system claim.

### Background

From publication CN 1651857 is known a measuring system, in which a measuring device of the measuring system comprises a measuring column and in which one measuring wire is used.

CN103900374A discloses a flexible synchronous movement mechanism for carrying out displacement compensation on a temperature measuring device for a self-baking electrode, the system comprising a sensor suspended by a column with chain and counterweight.

It is known from prior art that big drum-like objects such as foundry furnaces, containers, silos might damage unpredictable. Measuring systems known from prior art often comprise sensitive elements that do not function well in challenging conditions, which are common for example in foundries and in smelters due to high temperatures, impurities, dust and/or harmful gases. Also, measuring systems for containers and silos located outdoors and/or in mills are susceptible to challenging conditions in view of very high or very low temperatures, impurities, dust and/or harmful gases and strong air flows. Thus, there is a need to provide a measuring system for foundry furnaces, containers, silos and corresponding horizontal and vertical drum-like objects located in challenging conditions to prevent damaging of the drum-like object as at the present there is not available suitable measuring systems, which would be well functionable and reliable in challenging conditions for measurements of foundry furnaces, containers, silos and corresponding drum-like objects to prevent damaging of the drum-like object. Prior art measuring systems thus often have the problem inaccuracy and/or failures in operation in the challenging conditions and thus in challenging conditions big drum-like objects such as foundry furnaces, containers, silos may have been damaged unpredictably and suddenly.

An object of the invention is to create a measuring system, where the above-mentioned problems associated with the prior art can be eliminated or at least minimized.

In particular an object of the invention is to achieve a measuring system well functionable in challenging conditions for measurements of foundry furnaces, containers, silos and corresponding drum-like objects to prevent damaging of the drum-like object and/or to monitor conditions of the drum-like object and/or to collect measurement information regarding changes of the drum-like object during use.

### Summary

In order to achieve the above-mentioned objects, the measuring system according to the invention is mainly characterized by the features of the characterizing clause of the independent measuring system claim. Advantageous embodiments and features are disclosed in the dependent claims.

According to the invention the measuring system comprises at least one measuring device and a computer connected to the measuring device, wherein the measuring device of the measuring system comprises a measuring column located at a distance from an object to be measured, and at least three measuring wires, wherein one end of each measuring wire is connected to one of selected measuring points of an object to be measured and other end of each measuring wire extends into the measuring column and the other end extending to the measuring column of each of the measuring wires has a counterweight attached to it, wherein each of the measuring wires comprises a sensor located between the selected measuring point of the object and the counterweight, wherein one of the measuring wires comprises as the sensor a temperature sensor configured to measure the temperature of the object.

According to an advantageous feature of the invention the measuring system comprises 3-6 measuring wires.

According to an advantageous feature of the invention two of the measuring wires comprise as the sensors linear sensors configured to measure three dimensional relative changes in radius and height at the corresponding measuring point of the object.

According to an advantageous feature of the invention the measuring device and a computer are connected to each other by a serial cable, by which the measurement data from the measuring device is transmitted to the computer.

According to an advantageous feature of the invention the computer of the measuring system comprises a computer program configured to collect, and process measurement data received from the measuring device, when run in the computer.

According to an advantageous feature of the invention the measuring system comprises four measuring devices connected in series and the series of the measuring devices is connected to the computer.

According to an advantageous feature of the invention the measuring system further comprises an internet connection from the computer to a remote observing device.

According to an advantageous feature of the invention the measuring wire has constant length.

According to an advantageous feature of the invention the measuring system is a fixed measuring system.

According to an advantageous feature of the invention the measuring system further comprises a guide wheel connected to the measurement wire and movement of the object to be measured is configured to be transmitted by the measurement wire via the guide wheel to the measuring device to convert the measurement data by the sensor to electrical signal.

By the measuring system according to the invention and its advantageous features many advantages are achieved: The measuring system functions well and accurately as well as steadily in challenging conditions for measurements of foundry furnaces, containers, silos and corresponding drum-like objects to prevent damaging of the drum-like object and/or to monitor conditions of the drum-like object and/or to collect measurement information regarding changes of the drum-like object during use. Thus, possible damages of the foundry furnaces, containers, silos and corresponding drum-like objects can be predicted and thus damages can be avoided by taking necessary measures in operation of the objects or by beginning preventive repair or maintenance work.

### Brief description of the drawings

In the following the invention is explained in detail with reference to the accompanying drawing to which the invention is not to be narrowly limited.

In figure 1 is schematically shown an advantageous example of a measuring system according to the invention and

In figure 2 is schematically shown another advantageous example of a measuring system according to the invention.

### Detailed description

During the course of the following description like numbers and signs will be used to identify like elements according to the different views which illustrate the invention and its advantageous examples. In the figures some repetitive reference signs have been omitted for clarity reasons.

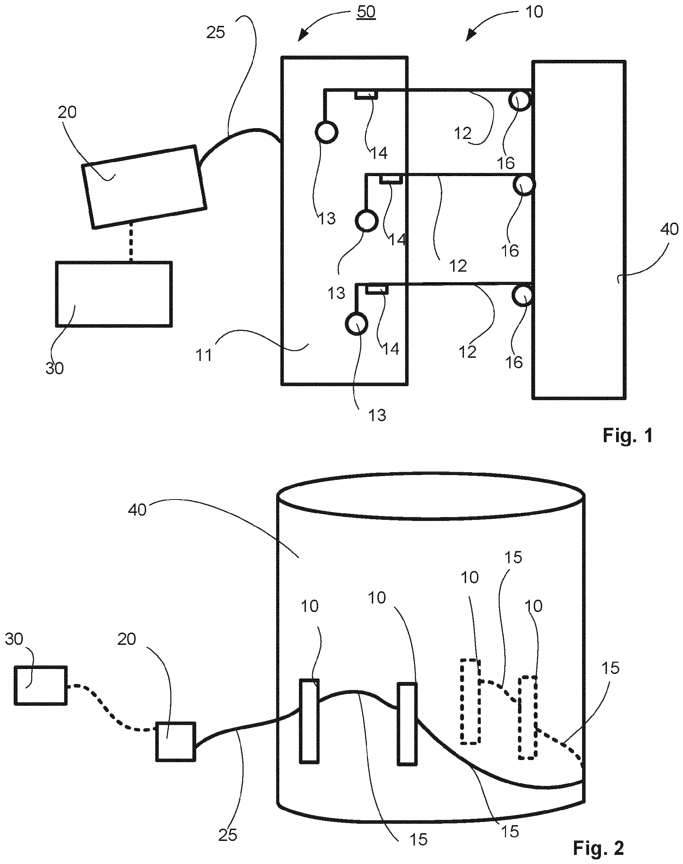

In the figure 1 schematically shown advantageous example the measuring system 50, which is a fixed measuring system, comprises a measuring device 10 and a computer 20 connected to the measuring device 10 by a serial cable 25 by which the measurement data from the measuring device 10 is transmitted to the computer 20. The measuring system 50 may additionally comprise an internet connection from the computer 20 to a remote observing device 30. The measuring device 10 comprises a measuring column 11 and at least three measuring wires 12, each of which have constant length. Advantageously the measuring device 10 comprises 3-6 measuring wires. Advantageously, the measuring wires 12 are configured to move from the measuring device 10 along the frame to the object 40 to be measured via guide wheels 16. One end of each measuring wire 12 is connected to one of selected measuring points of the object 40 to be measured and other end of each measuring wire 12 extends to the measuring column 11 and each measuring wires 12 has a counterweight 13 attached to it. Each of the measuring wires 12 comprises a sensor 14 located between the selected measuring point of the object 40 and the counterweight 13. Two of the measuring wires 12 comprises as the sensors 14 linear sensors and measure three dimensional relative changes in radius and height at the corresponding measuring point of the object 40 to be measured and one of the measuring wires 12 comprises as the sensor 14 a temperature sensor to determine the temperature of the object 40. The computer 20 of the measuring system 50 comprises a computer program configured to collect, and process measurement data received from the measuring device 10, when run in the computer 20. Movement of the object 40 to be measured is transmitted by the measuring wire 12 via the guide wheel 16 to the measuring device 10 in which the measurement data is converted by the linear sensor 14 electrical signal and is transmitted by a data transfer cable in serial connection to the computer 20. The measuring wires 12 are stiff such that movement of the object 40 to be measured does not cause elongation to the length of the measuring wire 12.

In the figure 2 is schematically shown advantageous example the measuring system 50, which is a fixed measuring system, comprising four measuring devices 10 connected in series by cables 15. The series of the measuring devices 10 is connected to a computer 20 by a serial cable 25 by which the measurement data from the measuring devices 10 is transmitted to the computer 20. The measuring system 50 may additionally comprise an internet connection from the computer 20 to a remote observing device 30. Each measuring device 10 comprises a measuring column 11 and three measuring wires 12, each of which have constant length. One end the measuring wire 12 is connected to one of selected measuring points of the object 40 to be measured and other end of the measuring wire 12 extends to the measuring column 11 and has a counterweight 13 attached to it. Each of the measuring wires 12 comprises a sensor 14 located between the selected measuring point of the object 40 and the counterweight 13 (fig. 1). In connection with each of the measuring wires 12 a guide wheel 16 (fig. 1) is provided. Movement of the object 40 to be measured is transmitted by the measuring wire 12 via the guide wheel 16 to the measuring device 10 in which the measurement data is converted by the linear sensor 14 to electrical signal and is transmitted by a data transfer cable in serial connection to the computer 20. The measuring wires 12 are stiff such that movement of the object 40 to be measured does not cause elongation to the length of the measuring wire 12. Two of the measuring wires 12 comprises as the sensors 14 linear sensors and measure three dimensional relative changes in radius and height at the corresponding measuring point of the object 40 to be measured and one of the measuring wires 12 comprises as the sensor 14 a temperature sensor to determine the temperature of the object 40. The computer 20 of the measuring system 50 comprises a computer program configured to collect, visualize and, if needed, process measurement data, received from the measuring device 10, when run in the computer 20.

The measurement data from the measurement wires 12 and the sensors 14 is transmitted to the computer 20 and the measurement data is followed manually or by a computer program and when any abnormalities in view of normal occur in the measurement data preventive measures in operation of the objects are taken or preventive repair or maintenance work is begun in order to prevent damage of the object 40. The measuring system 50 is advantageously continuously operation. The measuring system 50 additionally comprises a fixed grid, by which reference data of geometry of the object 40 to be measured is provided to the measuring system 50. The grid is advantageously defined by a 3D - laser measuring system.

The measuring system is advantageously a 3D - measuring system, which is a fixed measuring system, and comprises a measuring device 10 and to the measuring device 10 by a serial cable 25 connected computer 20, by via which serial cable 25 measurement data received by the measuring device 10 is transmitted to the computer 20. The measuring system 50 may also comprise an internet-connection from the computer to a remote observing device 30, to which data is transmitted for example by an internet router. Advantageously, in the measuring system the measurement date is transmitted by a data transfer protocol indexed in a selected manner. For each measurement data an alert limit can be provided, whereby the measuring device 10 gives an alert and/or transmits an alert to the observing device, when the measurement data is outside the alert limits.

In the description in the foregoing, although some functions have been described with reference to certain features and examples, those functions may be performable by the other features and examples whether described or not. Although features have been described with reference to the certain examples, those features may also be present in the other examples whether described or not.

Above only some advantageous examples of the inventions have been described to which examples the invention is not to be narrowly limited and many modifications and alterations are possible within the invention as defined in the following claims.

## Claims

1. Measuring system (50) for foundry furnaces, containers, silos and corresponding drum-like objects, which measuring system (50) comprises at least one measuring device (10) and a computer (20) connected to the measuring device (10), which measuring device (10) of the measuring system (50) comprises a measuring column (11) located at a distance from an object (40) to be measured, **characterized in that** the measuring system (50) comprises at least three measuring wires (12), that one end of each measuring wire (12) is connected to one of selected measuring points of the object (40) to be measured, and other end of each measuring wire (12) extends to the measuring column (11) and the other end extending to the measuring column (11) of each measuring wire (12) has a counterweight (13) attached to it, that each of the measuring wires (12) comprises a sensor (14) located between the selected measuring point of the object (40) and the counterweight (13), and that one of the measuring wires (12) comprises as the sensor (14) a temperature sensor configured to measure the temperature of the object (40).

2. The measuring system according to claim 1, **characterized in that** the measuring system (50) comprises 3-6 measurement wires (12).

3. The measuring system according to claim 1 or 2, **characterized in that** two of the measuring wires (12) comprise as the sensors (14) linear sensors configured to measure three dimensional relative changes in radius and height at the corresponding measuring point of the object (40).

4. The measuring system according to any of the preceding claims, **characterized in that** the measuring device (10) and the computer (20) are connected to each other by a serial cable (25), by which the measurement data from the measuring device (10) is transmitted to the computer (20).

5. The measuring system according to any of the preceding claims, **characterized in that** the computer (20) of the measuring system (50) comprises a computer program configured to collect and process measurement data received from the measuring device (10), when run in the computer (20).

6. The measuring system according to any of the preceding claims, **characterized in that** the measuring system (50) comprises four measuring devices (10) connected in series and the series of the measuring devices (10) is connected to the computer (20).

7. The measuring system according to any of the preceding claims, **characterized in that** the measuring system (50) further comprises an internet connection from the computer (20) to a remote observing device (30).

8. The measuring system according to any of the preceding claims, **characterized in that** the measuring wire (12) has constant length.

9. The measuring system according to any of the preceding claims, **characterized in that** the measuring system (50) is a fixed measuring system.

10. The measuring system according to any of the preceding claims, **characterized in that** the measuring system (50) further comprises a guide wheel (16) connected to the measuring wire (12) and that movement of the object (40) to be measured is configured to be transmitted by the measuring wire (12) via the guide wheel (16) to the measuring device (10) to convert the measurement data by the sensor (14) to electrical signal.

## Patentansprüche

1. Messsystem (50) für Gießereiöfen, Behälter, Silos und entsprechende trommelartige Objekte, wobei das Messsystem (50) mindestens eine Messvorrichtung (10) und einen mit der Messvorrichtung (10) verbundenen Computer (20) umfasst, wobei die Messvorrichtung (10) des Messsystems (50) eine Messsäule (11) umfasst, die sich in einem Abstand von einem zu messenden Objekt (40) befindet, **dadurch gekennzeichnet, dass** das Messsystem (50) mindestens drei Messdrähte (12) umfasst, dass ein Ende jedes Messdrahts (12) mit einem von ausgewählten Messpunkten des zu messenden Objekts (40) verbunden ist und ein anderes Ende jedes Messdrahts (12) sich bis zur Messsäule (11) erstreckt, und das andere Ende, das sich bis zur Messsäule (11) jedes Messdrahts (12) erstreckt, ein daran angebrachtes Gegengewicht (13) aufweist, dass jeder der Messdrähte (12) einen Sensor (14) aufweist, der sich zwischen dem ausgewählten Messpunkt des Objekts (40) und dem Gegengewicht (13) befindet, und dass einer der Messdrähte (12) als Sensor (14) einen Temperatursensor umfasst, der dazu konfiguriert ist, die Temperatur des Objekts (40) zu messen.

2. Messsystem nach Anspruch 1, **dadurch gekennzeichnet, dass** das Messsystem (50) 3-6 Messdrähte (12) umfasst.

3. Messsystem nach Anspruch 1 oder 2, **dadurch gekennzeichnet, dass** zwei der Messdrähte (12) als Sensoren (14) Linearsensoren umfassen, die dazu konfiguriert sind, dreidimensionale relative Änderungen von Radius und Höhe am entsprechenden Messpunkt des Objekts (40) zu messen.

4. Messsystem nach einem der vorhergehenden Ansprüche, **dadurch gekennzeichnet, dass** die Messvorrichtung (10) und der Computer (20) durch ein serielles Kabel (25) miteinander verbunden sind, über das die Messdaten von der Messvorrichtung (10) an den Computer (20) übertragen werden.

5. Messsystem nach einem der vorhergehenden Ansprüche, **dadurch gekennzeichnet, dass** der Computer (20) des Messsystems (50) ein Computerprogramm umfasst, das dazu konfiguriert ist, von der Messvorrichtung (10) empfangene Messdaten zu sammeln und zu verarbeiten, wenn es im Computer (20) ausgeführt wird.

6. Messsystem nach einem der vorhergehenden Ansprüche, **dadurch gekennzeichnet, dass** das Messsystem (50) vier in Reihe geschaltete Messvorrichtungen (10) umfasst und die Reihe der Messvorrichtung (10) mit dem Computer (20) verbunden ist.

7. Messsystem nach einem der vorhergehenden Ansprüche, **dadurch gekennzeichnet, dass** das Messsystem (50) ferner eine Internetverbindung vom Computer (20) zu einer Fernbeobachtungsvorrichtung (30) umfasst.

8. Messsystem nach einem der vorhergehenden Ansprüche, **dadurch gekennzeichnet, dass** der Messdraht (12) eine konstante Länge aufweist.

9. Messsystem nach einem der vorhergehenden Ansprüche, **dadurch gekennzeichnet, dass** das Messsystem (50) ein stationäres Messsystem ist.

10. Messsystem nach einem der vorhergehenden Ansprüche, **dadurch gekennzeichnet, dass** das Messsystem (50) ferner ein Führungsrad (16) umfasst, das mit dem Messdraht (12) verbunden ist, und dass die Bewegung des zu messenden Objekts (40) dazu konfiguriert ist, vom Messdraht (12) über das Führungsrad (16) an die Messvorrichtung (10) übertragen zu werden, um die Messdaten des Sensors (14) in ein elektrisches Signal umzuwandeln.

## Revendications

1. Système de mesure (50) pour fours de fonderie, conteneurs, silos et objets correspondants en forme de tambour, lequel système de mesure (50) comprend au moins un dispositif de mesure (10) et un ordinateur (20) connecté au dispositif de mesure (10), lequel dispositif de mesure (10) du système de mesure (50) comprend une colonne de mesure (11) située à une distance d'un objet (40) à mesurer, **caractérisé en ce que** le système de mesure (50) comprend au moins trois fils de mesure (12), qu'une extrémité de chaque fil de mesure (12) est connectée à l'un de points sélectionnés de l'objet (40) à mesurer, et qu'une autre extrémité de chaque fil de mesure (12) s'étend vers la colonne de mesure (11) et que l'autre extrémité s'étendant vers la colonne de mesure (11) de chaque fil de mesure (12) comporte un contrepoids (13) qui lui est fixé, que chacun des fils de mesure (12) comprend un capteur (14) situé entre le point de mesure sélectionné de l'objet (40) et le contrepoids (13), et que l'un des fils de mesure (12) comprend comme capteur (14) un capteur de température configuré pour mesurer la température de l'objet (40).

2. Système de mesure selon la revendication 1, **caractérisé en ce que** le système de mesure (50) comprend 3 à 6 fils de mesure (12).

3. Système de mesure selon la revendication 1 ou 2, **caractérisé en ce que** deux des fils de mesure (12) comprennent comme capteurs (14) des capteurs linéaires configurés pour mesurer des changements relatifs tridimensionnels de rayon et de hauteur au point de mesure correspondant de l'objet (40).

4. Système de mesure selon l'une quelconque des revendications précédentes, **caractérisé en ce que** le dispositif de mesure (10) et l'ordinateur (20) sont connectés l'un à l'autre par un câble sériel (25) par lequel les données de mesure du dispositif de mesure (10) sont transmises à l'ordinateur (20).

5. Système de mesure selon l'une quelconque des revendications précédentes, **caractérisé en ce que** l'ordinateur (20) du système de mesure (50) comprend un programme informatique configuré pour collecter et traiter des données de mesure reçues en provenance du dispositif de mesure (10) lorsqu'il est exécuté sur l'ordinateur (20).

6. Système de mesure selon l'une quelconque des revendications précédentes, **caractérisé en ce que** le système de mesure (50) comprend quatre dispositifs de mesure (10) connectés en série et que la série des dispositifs de mesure (10) est connectée à l'ordinateur (20).

7. Système de mesure selon l'une quelconque des revendications précédentes, **caractérisé en ce que** le système de mesure (50) comprend en outre une connexion Internet de l'ordinateur (20) à un dispositif d'observation distant (30).

8. Système de mesure selon l'une quelconque des revendications précédentes, **caractérisé en ce que** le fil de mesure (12) a une longueur constante.

9. Système de mesure selon l'une quelconque des revendications précédentes, **caractérisé en ce que** le système de mesure (50) est un système de mesure fixe.

10. Système de mesure selon l'une quelconque des revendications précédentes, **caractérisé en ce que** le système de mesure (50) comprend une roue de guidage (16) connectée au fil de mesure (12) et que le mouvement de l'objet (40) à mesurer est configuré pour être transmis par le fil de mesure (12) via la roue de guidage (16) au dispositif de mesure (10) pour convertir les données de mesure du capteur (14) en signal électrique.
